# EUROPEAN PATENT APPLICATION

(11) **EP 4 549 367 A2**
(43) Date of publication of application: **07.05.2025**
(21) Application number: 24209181.7
(22) Date of filing: 15.11.2017
(51) Int. Cl.: B66D 1/50

(54) **A DEVICE AND METHOD TO REGULATE A BREEDING PEN IN SEA, AND APPLICATIONS TREREOF**

(30) Priority: 15.11.2016 NO 20161805
(62) Divisional of application: 17884641.6
(71) Applicant: Marine Construction AS, 5200 Os (NO)
(72) Inventor: Håkon Riple, Tore, 5200 Os (NO)
(74) Representative: Acapo AS

(57) **Abstract**

It is disclosed a construction and a method for regulating depth position in the sea of a floating pen (10), where the pen is coupled to a line (20) that can be winded in or out on a winch reel (82) driven by an accompanying driving motor (84), where the construction further comprises a control system for regulating the driving motor, and it is characterized in that the control system regulates the operation of the driving motor based on registering the tension in the line (20). It is disclosed various usages of the construction and method in connection with regulation of the height configuration in the sea of aquaculture breeding pens.

## Description

### Field of the invention

The present invention relates to a construction and a method for regulating the depth position of a floating pen in the sea, wherein the pen is coupled to a wire that can be winded in or out on a winch reel driven by an accompanying driving motor, the construction further comprises a control system for regulating the drive motor, as it is appear from the preface in the appended clauses 1 and 17, respectively.

The invention relates particularly to an aquaculture facility with one or multiple pens used for breeding of marine organisms such as fish, and that is attached to floats for holding a suitable elevation configuration, more specifically that the top-ring of the pen forms a float collar with air that keeps the pen afloat. At the same time the invention can also be used for anchoring of pontoons in general, for example anchoring of equipment such as more specifically floating windmills at sea.

The invention also relates to use of the anchoring construction.

### Background of the invention

The construction according to the invention has a starting point in that an aquaculture facility should have possibility for immersion in water mass. In this connection it is referred to the following publications: 104823928 A (You Qinghong), NO-153.991 B (Viking fish AB), CN-102047853 B (univ zhejiang ocean), RU-2177222 C1 (I Sskij I Fiz Tekhn I Radiotekh), FR-2.665.332 B3 (Aquavar SA) and WO/2016/106459 A1 (Universidad De Conception), additionally to KR-20090096843, GB-2180809, KR-20160108863 and US-4.408.454.

These publications show various methods for regulating the elevation that installations, particularly in aquaculture, take in the water mass in the sea.

### Objective of the present invention

It is an objective of the invention to provide a generally new system for enabling regulation of the elevation of pen installations of one or more breeding pens in an installation, and that floats in the sea.

One of the objectives is to provide a construction for regulating the elevation of pens in the sea for protecting the salmon against lice infestation in den upper water mass and protecting the installation during high sea and water currents in the water masses.

It is targeted to be able to pull the installation down in the sea by exercising positive downhaul by using a new construction comprising a winch, while the pen itself via pontoons or its float collar or ring, at any time has positive buoyancy in the sea.

### The present invention

The construction according to the invention is characterised in that a control system regulates the operation of the driving motor based on registrations of the tension in the wire.

According to a preferred embodiment the control system is coupled to a frequency converter, and is configured for utilizing the converter's internal voltage reference as a modulator for a d-q transform for calculating the tension in the wire.

According to another preferred embodiment, the construction comprises units that register the tension in the wire via one or more of the following: load cells in the wire, via the driving motor's torque or current draw. Further the driving motor is an electric motor or a hydraulic or pneumatic motor.

According to a preferred embodiment, the control system regulates the driving motor on basis of registration of data from one or more sensors inn or around the pen, which the sensors measures:
- the installation's distance A to the water surface, respectively its distance B to the seabed,
- density of occurrence of lice in or at the pen,
- the buoyancy of the breeding pen in the sea,
- the pen's/float collar's inclination in the sea,
- movements or displacement of one or more of the pen's floaters,
- density of the biomass in the pen, and
- the changing between ebb and flow.

The further preferred embodiments appear in the dependent clauses 6-16.

The method according to the invention is characterised in that the regulation of the driving motor is based on registration of the tension in the wire.

According to a preferred embodiment, the control system comprises a frequency converter where the internal voltage reference of the frequency converter is utilized as modulator for a d-q transform that is used for calculating the tension in the wire.

The further preferred embodiments of the method are according to clauses 19-20.

According to the invention the construction and the method above are used, for regulating of the depth position of an aquaculture pen in the sea, for compensating for variations of the water level above the seafloor as consequence of the changes between ebb and flow and accompanying tidal currents, and pulling the pen down into the sea at threatening storms, waves and sea currents and also when the aquaculture pen is threatened by pollutions at the sea surface. Such pollutions can comprise different chemicals such as oil.

The construction and method according to the invention is used for regulating the breeding pens at a multi pen facility, where the depth positions of each sea pen in the plant are individually regulated and coordinated by a common control system S1/S2.

### Particularly preferred embodiments of the invention

The invention as defined above, can be applied on floating installations in general, but is here particularly intended used for regulating the depth configuration in the sea for pens. In the following the invention is particularly described in reference to breeding pens and multi pen installations.

According to one embodiment the down-pull is performed by a unique winch that is mounted at the seabed, and that comprises a motor that drives a reel with an anchoring line (wire, rope, hawser, chain or similar) that runs upwards to a fastening at the underside of each pen in the aquaculture facility. As a safeguarding it is preferred to use two or more winch systems with accompanying hawsers for regulating the position of the pen in the sea. The operation and the control system for the winch are preferably coupled to a feeding raft or similar floating base that is located in close proximity of the facility. From where the regulation can be forwarded to a central control room that can simultaneously control several aquaculture facilities with a plurality of pens.

The invention for depth regulation can as mentioned be employed on all installations that floats in the sea, and particularly different pontoon installation and pen installations that has the need for such depth regulation as described above. It is based on components and methods known from subsea processing installations for oil and gas, but is assembled in a completely novel way.

The winch itself is driven by an electric motor with a reduction gear or can be directly driven by an electric motor. The electric motor is preferably an AC-motor. The down-pull system is designed for the particular facility. The motor can alternatively comprise a fluid driven motor as for example driven pneumatically or hydraulically.

The novel construction for performing immersion using a anchoring to the seabed is novel and substantially differs compared to conventional and other submersible installations, which mostly employs regulation of the buoyancy to achieve the mentioned depth regulation.

### Description of the figures

Preferred embodiments of the invention shall in the following be described more detailed with reference to the enclosed figures, wherein:
Figure 1 shows a vertical perspective of an installation, in form of a pen installation that is kept afloat in the sea, with its anchoring to the seabed.
Figure 2 shows a perspective of a bottom frame part that is used in the construction according to the invention, and that comprise a fastening frame 70 anchored to the seabed 17, and a driving motor and reel box 80 that can be attached and released from the fastening frame; i.e. in position for immersion and anchoring to the fastening frame, or lifting from the fastening frame.
Figure 3 shows the fastening frame with its location on or coupled to the seabed sediments, and driving motor and reel box placed in the frame.
Figure 4a shows a pen with a float collar in a surface position and with tightened anchoring lines.
Figure 4b shows an intermediate position of the pen in the sea, with slackened anchoring lines.
Figure 4c shows a pen in a submersed position below the surface with tightened anchoring lines.
Figure 5 shows a perspective of a floating pen facility comprising a frame anchoring that anchors four pens. While the frame mooring is mainly permanent mounted in the sea, the pens can individually be freely exchanged from its positioning in the frame mooring and be replaced.

### Description of preferred embodiments of the invention

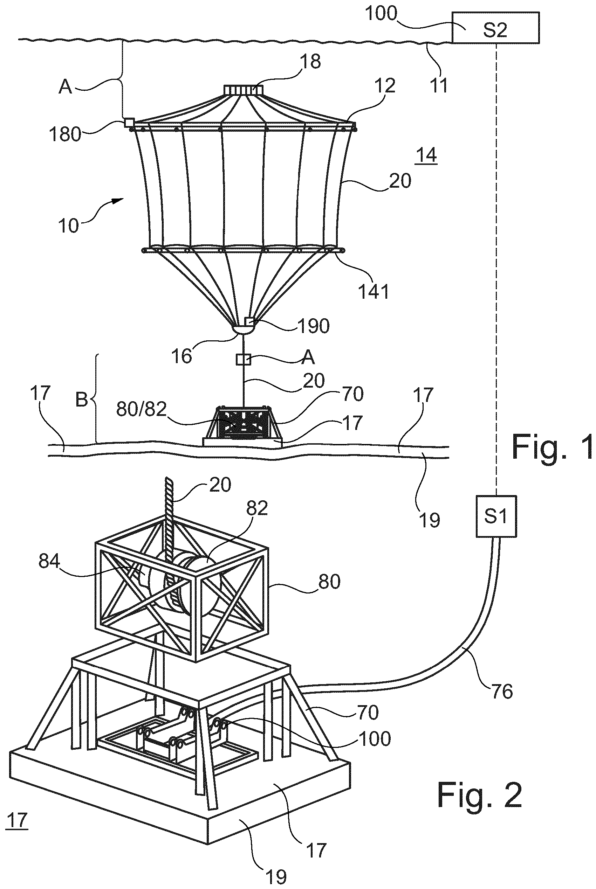

Introductorily it is referred to figure 1 that shows an installation 10, exemplified with a pen for aquaculture, in its operational position in the sea. It is coupled towards the seabed 17 with one or more lines/hawsers 20 that by winding inn and winding out on a winch reel 82 with a motor drive 84, is employed for regulating the height in the sea of the pen 10.

The pen 10 comprises a net bag that is anchored in a upper ring shaped floating collar (floater) 12 that normally is arranged horizontally in the sea and that gives the construction positive buoyancy. The upwards facing top side of the pen is also covered with a detachable tightenable netting (not shown) since the whole pen should be able to be submersed below the water line 11. The float collar is for example assembled of straight pipe elements that are welded together to circular shape. The bottom section 16 of the pen forms fastening points for mentioned (at least two) hawsers 20 that runs down to an anchoring at the seabed 17 where the hawser is used for pulling down and releasing upwards the pen in the water mass / the sea 14. Between the upper float collar 12 and the bottom it is also mounted a stiffer ring shape 141 that keeps the pen spread. Preferably, the bottom section of the pen comprises also an area, specifically with a funnel shape, for collection of waste and dead fish. This area can be emptied by using a hose or other solution for removing waste at the bottom of the net, the waste is brought up to the surface for suitable handling. The required buoyancy can also be provided by separate floater tanks that are coupled to the pen construction 10.

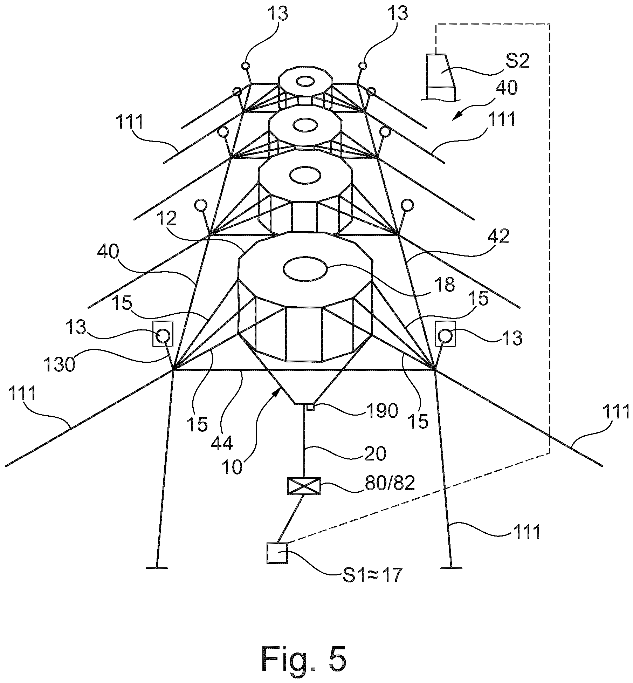

The float collar 12 in the upper part of the pen 10 is with lines/hawsers 115 sideways anchored to a frame mooring 40 as shown in figure 5 to achieve mentioned side stabilization. The shown frame anchoring 40 is a more or less permanent installation in the sea for mounting single breeding pens; figure 5 shows four such pens.

The mooring 40 constitutes wires/chains 42, 44 that are tensioned, stretched and coupled together to form an approximate horizontal grid. From a coupling plate in each corner in the grid anchor lines 111 run angled downward in the sea to fastening in the seabed. From the same coupling plates in the junctures runs a hawser/line 130 upward to floats 13 in the surface, such that the frame construction 40 is held at a suitable depth in the sea 14 below the sea surface, in that it is held down by the anchoring to the seabed, and pulled upwards by the floats.

In the coupling plates the anchoring lines 15 are divided into three or more moorings that are fastened to the float collars 12 of the respective pen 10. Each float collar 12 can be coupled to four floats 13 via the mentioned junctures in the grid, as also figure 5 shows. The floats 13 have as objective to hold the weight of the anchor lines 15 and also secure distribution of forces and geometric stability in the mooring, and make sure that the mooring forms as much as possible a horizontal angle in towards the float collar 12.

The coupling plates of the frame mooring are therefore interconnected to each other with horizontal ropes. These can form a rectangle or square frame around each pen and secure distribution of forces and geometric stability in the mooring. The floats can be provided with pressure sensor or other sensor that detects when/if the float is pulled down or below water. Detection of that one or more floats is pulled below water indicate that the pen has been displaced and pulls in an off lead angle/uneven in the moorings. This can thereby be employed for regulation of the winch and wind in/out, such that the pen is positioned optimally with respect to tension in the net and the mooring.

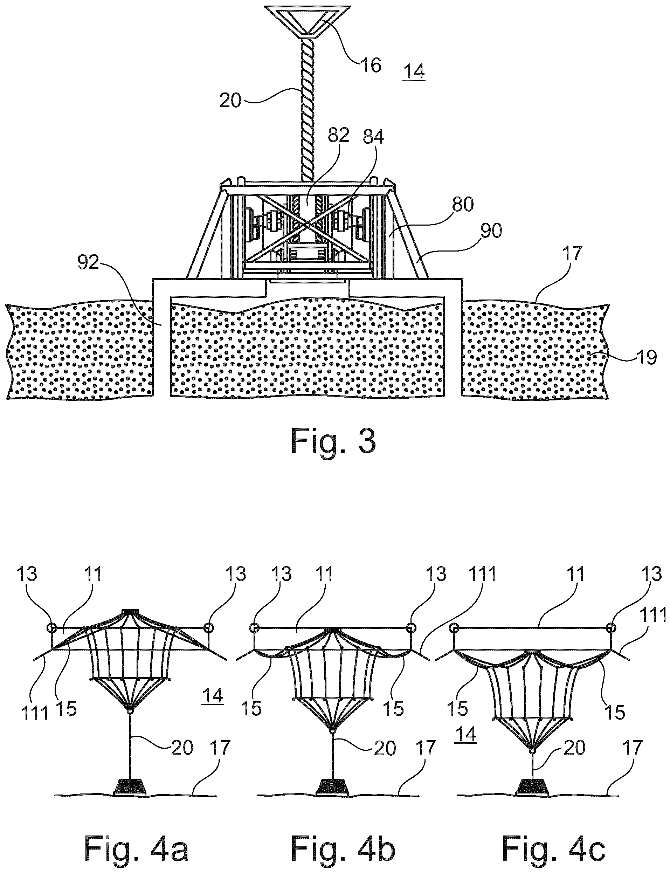

Because the coupling plates can be located at approximately 15 meter below sea level 11 the anchors are in a submersing phase (or elevate phase) as shown in figure 4b, somewhat loose. With current in the sea the pen 10 will nevertheless drift such that one side of the mooring is tightened. The figure 4a shows the pen 10 in a regular usage position with the float collar 12 in the water surface 11, while figure 1 and 4c shows the pen submersed in the water mass 14. It is evident that when the float ring is located in the surface, the lines 15 are held tensioned upwards with inclination from the coupling plates, while when it is submersed, the lines are held tensioned downwards with inclination from the coupling plates.

In submersed position in figure 4c the moorings are thus tightened. With a normal frame mooring can the distance between the float collar 12 and the surface 11, be two times the depth to a coupling plate.

The objective with the invention is to provide a construction that should be able to pull the whole pen down into the water mass for shorter or longer periods. Further the objective is that the construction simultaneously is holding the pen installation at the correct depth in the sea in its normal operation, in that it in short notice can be activated to regulate the height in the sea. I.e. that with an incoming storm with waves that are undesired, the construction can be activated and pull the pen down into the deep, down towards the seabed.

Figure 4a: The pen in normal operation. The float collar 12 is located in the water surface and is moored in the frame mooring via lines 15 that are tightened, similar to a conventional installation. The hawser 20 is coupled to the bottom of the pen and to the winch at the bottom 17, and is ready to pull the pen downward in the sea.

Figure 4b shows an intermediate position where the mooring lines 15 are loose. The winch has pulled the installation halfway downward towards fully submersed state. At current in the water the pen will nevertheless drift such that one side of the mooring will be tightened.

Figure 4c (and figure 1) shows the second operational position. The pen is here fully submersed and in stabilised position with tightened moorings 15.

The pen shall be flexible with respect to its elevating and immersion in the sea by winding in and out of the hawser 20 by the winch 82.

When the pen has a stable position in the sea over time, the motor drive of the winch can be put into a stop or a rest state, and the reel is secured in fixed position by a mechanical locking means, such as a catch lever, strap, clip, blocks, hydraulic or electric locking means. One advantage with an electric motor is that a particular torque can be configured and the line will maintain the same tension. When the tension is reduced as for example by ebb sea the lines will be winded in until the tension in the lines equates the torque. In the opposite case the line will be pulled out when the water level raises as consequence of for example flow tide to the tension equalizes the torque, as motor brake. One electric motor can thereby dynamically hold the same tension in the line over time.

According to the invention the elevation configuration is performed via a winch frame 80 that is releasable anchored to a bottom frame 70. The bottom frame 70 is also releasable or permanent attached on or in the seabed 17 beneath the pen 10. Figure 2 shows this winch frame 80 with a reel 82 with the accompanying winch motor 84, and which is constructed in a framework of beams and struts with a seat for placement of winch reel and motor 80, and also a housing that houses a control unit for the operation of the motor 84. The winch is dimensioned accord to the reaction forces from buoyancy, current, wind and waves onto the breeding pen.

The winch frame 80 that can be set down in and pulled up from the bottom frame 70 at the seabed 17, are clearly shown in figure 3. The bottom frame 70 also comprises a framework of beams and struts, preferably mounted to a bottom frame, for example of concrete, and that has such a weight that it can stand on the seabed, also by use of so called "mud mat". Depending on the bottom sediments consistence, the bottom plate comprises vertical legs 92 that are anchored down into the bottom sediment 19 for securing against sideways displacement. The foundation can also be carried out by using well known suction anchor technology. The reel 82 can winch inn and out the line/hawser 20 that is fastened in the bottom section 16 of the pen 10.

According to a preferred embodiment, it is installed at least two or more such bottom frames 70 in/on the seabed, and with accompanying extra hawsers fastened in the bottom section 16 of the pen 10. These frames can be connected together in a common unit, or constitute separate frames placed on the seabed. Thereby it is established a safeguard against that one frame with the winch construction is damaged or that its function is disturbed, or for example that it occurs break in one of the hawsers 20.

The bottom frame comprises internal regulatable locking elements 100 that fasten the winch frame 80 to the frame. The locking elements 100 can release the winch frame 80 from the locking such that it can be lifted up to the surface with a separate hawser, for example when it is a need for maintenance and repairs, where the hawser for example is fastened to lifting ears in each corner of the winch frame 80. The release of the winch frame 80 from the bottom frame 70 appears from figure 2. The winch unit 80 is lifted (lowered) into place by an installation vehicle with a crane. A ROV can be employed for securing that the frame parts of the units 80 "hits" in correct position in the locking element 100 in the bottom frame 70 and to fastening the lifting hawser.

When it is preferred that the floating collar 12 of the pen all the time shall float in the water surface 11, the control system will make sure that the winch releases or winches in hawser in correlation with the changed water level 11 during the daily (two times per day) change between ebb and flow.

The winch reel 82 is preferably driven by an electro motor. The motor is regulated from an external control unit S1 via a suitable cable 76 that comprises conductors for the control system and also the power supply to the winch motor 84. A central control unit S2 for individual regulation of a plurality pens in a larger installation can be installed on a raft 110 in proximity on the surface (figure 1). See also the coupling between S1 and S2 as dotted line in figure 5. It can also be a wireless control system.

The control unit S1 at the sea surface (11) is further coupled a central control station S2 with instruments for coordinating the operation of multiple pens (10) in an aquaculture facility.

Regulation of the winch has the following scenarios:
1) Down pull of pen
2) Elevate pen to the surface
3) Hold the pen with a constant tension for compensating for tidal water and other environmental forces the act onto the pen

The regulation is based on that the winch continuously regulates the tension in the hawser. This gives effect in that the current draw in the winch motor varies depending on the tension state in the hawser 20. Current and voltage that is measured out from a frequency converter is transferred to a control unit that can regulate driving force of the frequency converter.

This can be performed with an algorithm that uses the converter's internal voltage reference as modulator for a d-q transform.

d-axis and q-axis components of the converter current are then determined. Based on this the torque can be determined and the tension in the pen bag is readjusted to defined reference value.

This is used also for compensating for voltage drop in the supply cable such that the relationship (voltage/frequency) U/f=constant is maintained for the motor. It can also measure the tension in the hawser by that this comprise one or more load cells A and that transfers signal about actual tension to the control unit S. Load cells can also be placed in the hawser at the fastening point in the net or at the winch.

When the pen is stabile positioned in the sea 14, and regulation is superfluous, the winch reel 82 can be locked in a fixed position for example by a mechanical locking.

At floating state for taking into account the level difference due to ebb and flow the winch will stay with a constant tension in the line. This is known technology and is controlled and regulated of the frequency converter of the motor. This property will make sure that the net is a lot less influenced due to current compared to other concepts for submersible pens.

An alternative method for regulating is that the float collar of the pen 12 (or adjacent device in the installation ) comprises a sensor 180 that can register the distance A to the water surface 11, and that this parameter is used to perform the tension regulation.

The distance sensor 180 is signal coupled to the control system S that subsequently regulates the operation of the winch and the hawser 20. The control system S can then specify a set-value Aₒ for a desired distance A and that the winch 82 via the hawser 20 regulates according to for example when the pen shall be height adjusted in the sea 14 such that the float collar 12 follows the water surface. Readout of the sensor 180 can be used by the control system to winch inn or release hawser 20, such that the collar 12 of the pen all the time maintains the mentioned distance to the water surface 11 during the daily tidal water movement in the sea. When the pen 10 shall be elevated, it pulls, due to its own buoyancy, hawser from the reel wherein the brake of the winch is activated to control the unwinding of the hawser 20 from the reel 82.

Also the distance B to the seabed 17 is an actual regulation parameter for drift of the winch. The bottom section 16 of the pen 10 can for example comprises a second distance sensor 190 also signal coupled to the control system S. Also the value of the distance B can be configured as a set-value in the control system. This can for example be used to control the distance B to the seabed 17 and to the winch unit 80, for example if the pen is exposed to dangerous waves and current due to storm and similar, and that requires that the pen is pulled downwards towards the seabed 17, i. e. that at deviation from a set-value, the control system performs an adjustment of the length of the hawser by operation of the winch motor. Further it is desired to avoid that the bottom section of the pen 10 comes to close the seabed or the winch 80.

Both the sensors 180 and 190 can be operated simultaneously and give signal to the controls system S to regulate the operation of the hawser(s) 20 and thereby the height configuration of the pen in the sea 14.

One advantage by regulating of the tension in the line will be that the surface position of the breeding pen can be regulated such that the float collar at strong current is not pulled undesired below water. The winch will then release line such that the installation is not pulled below water, but still maintains the bag spread by the line.

In some embodiments the regulation of the winch is based on the tension in the line combined with adjustment of the buoyancy of the float collar, regulation of the buoyancy is preferably performed by air being supplied to or released out of (replaced by water) the float collar. The buoyancy in the float collar can then be regulated such that the force necessary for pulling the pen downwards in the water is reduced or such that the depth position of the pen is regulated upwards due to increased buoyancy.

In some embodiments one of several regulation parameters is pressure registered in or on the pen. One or more pressure sensors are placed in or on the pen and by registration of pressure changes this will indicate that the depth position of the pen is changed. The pressure changes are used for regulating the winch such that the pen is maintained at a desired depth position in the water masses 14. One advantage is a rapid determination of changes in the depth position of the pen and subsequently regulating the hawser 20 via the winch.

In some embodiments one or more regulation parameters are used for registering of changes in the position of the pen in respect to the seabed/winch. One or more position transmitters are placed at the seabed and on the pen. Changes in the position of the pen in respect to the seabed/winch are detected and the winch is regulated such that desired tension in the line is achieved. The position of the pen can be determined by an acoustic transmitter that measures the distance to one or more reference points from the pen or from the seabed.

In some embodiments the pen is provided with a sensor that measures angle/inclination of the float collar or other parts of the pen. Change in measured angle/inclination is used to wind in or release line. This is advantageous for compensating for current or waves. A pen 10 with a centre anchoring can in strong current be pulled down under water, such that more line needs to be released to maintain the float collar 12 more or less horizontal, such as in the water surface 11.

In some embodiments the pen is provided with a pressure sensor in the floating collar. Changes in the pressure in the float collar indicate the tension that the winch exercises on the pen. The winch is regulated such that the tension in the line is not damaging the net or other parts of the pen. The pressure may also be used for determining the tension in the line.

In some embodiments the depth position of the pen is regulated by detection of the concentration of fish lice, salmon lice, algae, jellyfish, and other possible parasites. Fish lice stay in the upper water masses and the fish can then be protected in that the pen is pulled down by the line 20 being winded in on the winch reel. Concentration of fish lice or parasites can be determined by a particle counter.

In some embodiments the winch is regulated based on the amount of dead fish in the pen. Dead fish and debris will accumulate in the bottom of the pen and add weight to the pen and thereby negative buoyancy, and then risking that the pen can sink downwards in the water mass. The winch will then pull in additional line as the line is unloaded by the weight of dead fish. Dead fish can be registered with a camera or similar and the winch is then regulated for compensating for the negative buoyancy, so that the pen maintains the desired depth position. Changes in the buoyancy of the pen can also be detected by changes in the tension in the line; this can be used for estimating death-rate of the fish in the pen. At high death-rate or changes in the amount of biomass the buoyancy of the pen will change. It is preferable that the bottom of the pen comprises an outlet for removing of dead fish and other downward sinking debris from the pen.

In some embodiments the pen is provided with an emergency release. The emergency release may be manual such that an operator can deactivate the winch so that down draw ceases or that the pen is positioned at a safe depth position. The emergency release may be automatic such that the winch accordingly is deactivated or goes to a safe state such that harmful situations are avoided. Harmful situations may be in case where the pen is pulled to depths that inflicts harm to the fish or pen. Emergency release may also mean that the line 20 is cut off, for example for rapid removal of the pen from the location.

In some embodiments the regulation of the depth position of the pen is speed regulated. The speed regulation prevents that the fish and the pen is inflicted damage during depth regulation. Speed regulation makes provide for the pen is not raised or lowered with too high speed. Preferably, 30-45 minutes is used for displacing the pen from floating to immersed position, a distance that may correspond to up to 40 meters depth.

In some embodiments the pen is only moored in a line in the bottom section of the pen. The line is coupled to a winch such that the depth position of the pen can be regulated. For allowing rotation of the pen around its vertical axis the line or the fastening point of the line to the pen is provided with a swivel. The swivel will allow that the pen rotates around its vertical axis without the line being inflicted unnecessary strain.

In some embodiments the pen can be provided with a roof or air dome, such that the fish has access to air at the upper edge of the pen when the pen is submersed. The hood or roof can be provided with camera or similar that registers position of the fish and density. As an example high density of fish uppermost in the pen in proximity of the roof indicates that little air is available and that the pen should be elevated.

In some embodiments of the pen the line is provided with a shock absorber for preventing that the pen is exposed to abrupt movement or jerks. Such movements may be caused by bilge well vessels, occurrence of abrupt waves or similar. The line will then be less exposed by abrupt movements in the pen, so that wear and chafing on the pen and the net is reduced. Also the winch will to a reduced degree be exposed for such wear and tear from such influences.

Preferably, the winch is provided with a line guide for correct winding in of the line onto the reel.

The electrical motor of the winch is in some embodiments regulated by direct control, where the torque of the motor is regulated by monitoring the relationship between current and voltage in the motor. By direct control of the motor the motor can be regulated by pulse width modulation of current and voltage. The electrical motor may also be provided with a rotation detector such that direction and speed of the rotations of the motor can be determined so that torque in the motor can be adjusted. In some cases the regulation of the motor may also comprise of monitoring the magnetic field in the motor for among other determining torque, rotation speed, and direction of turning of the winch reel.

The winch will at a certain torque in the electric motor feed out or wind in line. Changes in the tension in the line caused by influence onto the pen from ebb and flow or waves will make the motor brake outdraw of the line or wind in the line. This will give variations in the power usage of the motor. When the motor is braking is can be used for producing electrical energy that can be stored in a power storage (a battery) for usage at a later time.

In some embodiments the line runs from the bottom part of the pen via a fastening point via a pulley at the seabed and to a winch at the water surface. The winch may be attached to a raft, in the pen or an aquaculture facility. The fastening point at the seabed is a pulley, tackle or similar that permits that the winch can regulate the depth position of the pen. The depth position of the pen is regulated by winding in or feeding out the line on the winch. One such solution is advantageous by reducing the number of device parts at the seabed and simplifying maintenance of the winch.

In a preferred embodiment the depth position of the pen is regulated by several parameters in such a way that the desired depth position is maintained over time despite changing forces influence onto the pen. Changes in the tension in the line, data from sensors for position, buoyancy, pressure, and depth of the pen or mooring is used for regulating winding in or winding out of the line. This to be able to prevent harm to the pen and the fish in the pen.

In some embodiments several fish pens are grouped in an aquaculture installation such as shown and described in relation to figure 5. By use of one or more winches the depth position of the pens can be regulated individually. Individual regulation of the depth position of the pens is advantageous because, even in the same installation, may be subject to different environmental influence such as current, waves etc. inflicted to said installation. In such case the optimal depth position of the pens can be individually different.

In the invention it is provided a novel method and construction for regulating of depth position of an installation and in particular a pen in the sea or water masse.

### CLAUSES

1. Construction for regulating of depth position of a floating pen (10) in the sea, wherein the pen is coupled to a line (20) that can be winded in and out on a winch reel (82) driven by an accompanying driving motor (84), wherein the construction further comprises a control system for regulating the drive motor, characterized in that the control system regulates operation of the driving motor based on registration of the tension in the line (20).
2. Construction according to clause 1, characterized in that the control system is coupled to a frequency converter, and is adapted to utilize the internal voltage reference of the converter as modulator for a d-q transform for determining tension in the line (20).
3. Construction according to clause 1-2, characterized in that the construction comprises units that registers line tension via one or more of the following: load cells, (17) in the line (20), via torque of the driving motor and current draw.
4. Construction according to clause 1, characterized in that the driving motor is an electric motor or a hydraulic or pneumatic driven motor.
5. Construction according to clause 1-4, characterized in that the control system is operated based on registration of data from one or more sensors in and around the pen wherein the sensors measures on:
   - distance A of the installation (10) to the water surface (11) respectively its distance B to the seabed (17),
   - density of occurrence of lice in or at the pen,
   - buoyancy of the pen in the sea,
   - inclination in the sea of the pen/float collar (12),
   - movements or displacement of one or more of floats of the pen,
   - density of biomass in the pen, and
   - changes between ebb and flow.
6. Construction according to clause 1, characterized in that the line runs between the lower section (16) of the pen and the winch reel (82) mounted in a frame (80) at the seabed, or runs in a loop over a pulley coupled to the frame (80) and to a winch reel (82).
7. Construction according to clause 6, characterized in that the motor/winch frame (80) is releasable coupled to a bottom frame (70) at the seabed (17).
8. Construction according to clause 1, characterized in that the driving motor is coupled a fastening in the pen construction (12), wherein the line (20) runs in a loop over a pulley coupled to an anchoring at the seabed (17).
9. Construction according to any of the preceding clauses, characterized by comprising means for locking at least one of the winch reel (82) and drive motor (84).
10. Construction according to clause 9, characterized in that the driving motor (84) with accompanying winch reel (82) is collocated in a frame (80) that is releasable anchored to a bottom frame (70) laying at the seabed (17).
11. Construction according to one of the preceding clauses, characterized in that the bottom frame (70) comprises a number of anchoring legs (92) that is put into the sediments (19) below the seabed, such as suction anchor, and/or at the bottom frame is anchored with concrete weight or "mud mat".
12. Construction according to one of the preceding clauses, characterized in that the motor/winch frame (80) further comprises a house part (85) with a control unit for operation of the motor (84).
13. Construction according to one of the preceding clauses, characterized in that the control unit coupled to the motor/winch frame (80) is via a current and signal cable (76), coupled to a central control unit S1, particularly couple to a unit at the sea surface (11).
14. Construction according to clause 13, characterized in that the control unit S1 at the sea surface (11) is further couplet to a central control station S2 with instrumentation for coordinating the operation of several pens (10) in an aquaculture facility.
15. Construction according to one of the preceding clauses, characterized in that the installation is an aquaculture breeding pen with an upper ring shaped float collar (12) for anchoring of a net bag (10), wherein the float collar (12) provides positive buoyancy, its upper parts comprises upper lines and hawsers (15) for providing side stabilization of the construction while the bottom section (16) comprises fastening means for coupling of the line (20).
16. Construction according to clause 15, characterized in that the construction for positive buoyancy also comprises separately operating floats coupled to the aquaculture breeding pen.
17. Method for regulating depth position in the sea of a floating pen according to clauses 1-16, comprising a driving motor (84) that is regulated by a control system, characterized in that the regulation of the driving motor is based on that the tension in the line is registered.
18. Method according to clause 17, characterized in that the control system comprises a frequency converter wherein the internal voltage reference of the frequency converter is utilized as modulator for a d-q transformation that is used for determining the tension in the line.
19. Method according to clause 18, characterized in that further comprising compensating of voltage fall in the supply to the frequency converter.
20. Method according to clause 17, for height configuration of a breeding pen, characterized by the tension in the line (20) is based on one or more of the following registrations from sensors in or around the pen and that registers:
   - distance A of the installation (10) to the water surface (11) respectively its distance B to the seabed (17),
   - density of impurities and occurrence of lice in and at the pen,
   - buoyancy in the sea of the pen,
   - inclination in the sea of the pen/float collar (12),
   - movements or displacement of one or more of the floats of the pen,
   - density of biomass in the pen, and
   - changes between ebb and flow, wherein
   data from all sensors is registered in the central unit (S1) for eventual regulating of the height configuration of the pen (10).
21. Use of construction according to the clauses 1-16 and the methods according to clause 17-20 respectively, for regulation of height configuration in the sea of an aquaculture pen (10), for compensating for varying water level above the seabed (17) as effect of changes between ebb and flow subsequently accompanying tidal water currents, additionally pulling the breeding pen (10) down into the sea at threatening storms, waves and sea currents additionally when the aquaculture breeding pen is threatened by pollution in the water mass (14) and the sea surface (11).
22. Use of construction and method according to the preceding clauses, for regulating the pens in a multi breeding pen installation, wherein the height configuration for each breeding pen in the installation is individually regulated and coordinated and regulated in a common control system S1/S2.

## Claims

1. Construction for regulating of depth position of a floating pen (10) in the sea, wherein the pen is coupled to a line (20) that can be winded in and out on a winch reel (82) driven by an accompanying driving motor (84), wherein the construction further comprises a control system for regulating the drive motor, **characterized in that** the control system regulates operation of the driving motor based on registration of the tension in the line (20).

2. Construction according to claim 1, **characterized in that** the control system is coupled to a frequency converter, and is adapted to utilize the internal voltage reference of the converter as modulator for a d-q transform for determining tension in the line (20).

3. Construction according to claim 1-2, **characterized in that** the construction comprises units that registers line tension via one or more of the following: load cells, (17) in the line (20), via torque of the driving motor and current draw.

4. Construction according to claim 1, **characterized in that** the driving motor is an electric motor or a hydraulic or pneumatic driven motor.

5. Construction according to claim 1-4, **characterized in that** the control system is operated based on registration of data from one or more sensors in and around the pen wherein the sensors measures on:
- distance A of the installation (10) to the water surface (11) respectively its distance B to the seabed (17),
- density of occurrence of lice in or at the pen,
- buoyancy of the pen in the sea,
- inclination in the sea of the pen/float collar (12),
- movements or displacement of one or more of floats of the pen,
- density of biomass in the pen, and
- changes between ebb and flow.

6. Construction according to claim 1, **characterized in that** the line runs between the lower section (16) of the pen and the winch reel (82) mounted in a frame (80) at the seabed, or runs in a loop over a pulley coupled to the frame (80) and to a winch reel (82).

7. Construction according to claim 6, **characterized in that** the motor/winch frame (80) is releasable coupled to a bottom frame (70) at the seabed (17).

8. Construction according to claim 1, **characterized in that** the driving motor is coupled a fastening in the pen construction (12), wherein the line (20) runs in a loop over a pulley coupled to an anchoring at the seabed (17).

9. Construction according to any of the preceding claims, **characterized by** comprising means for locking at least one of the winch reel (82) and drive motor (84).

10. Construction according to claim 9, **characterized in that** the driving motor (84) with accompanying winch reel (82) is collocated in a frame (80) that is releasable anchored to a bottom frame (70) laying at the seabed (17).

11. Construction according to one of the preceding claims, **characterized in that** the bottom frame (70) comprises a number of anchoring legs (92) that is put into the sediments (19) below the seabed, such as suction anchor, and/or at the bottom frame is anchored with concrete weight or "mud mat".

12. Construction according to one of the preceding claims, **characterized in that** the motor/winch frame (80) further comprises a house part (85) with a control unit for operation of the motor (84).

13. Construction according to one of the preceding claims, **characterized in that** the control unit coupled to the motor/winch frame (80) is via a current and signal cable (76), coupled to a central control unit S1, particularly couple to a unit at the sea surface (11).

14. Construction according to claim 13, **characterized in that** the control unit S1 at the sea surface (11) is further couplet to a central control station S2 with instrumentation for coordinating the operation of several pens (10) in an aquaculture facility.

15. Construction according to one of the preceding claims, **characterized in that** the installation is an aquaculture breeding pen with an upper ring shaped float collar (12) for anchoring of a net bag (10), wherein the float collar (12) provides positive buoyancy, its upper parts comprises upper lines and hawsers (15) for providing side stabilization of the construction while the bottom section (16) comprises fastening means for coupling of the line (20).

16. Construction according to claim 15, **characterized in that** the construction for positive buoyancy also comprises separately operating floats coupled to the aquaculture breeding pen.

17. Method for regulating depth position in the sea of a floating pen according to claims 1-16, comprising a driving motor (84) that is regulated by a control system, **characterized in that** the regulation of the driving motor is based on that the tension in the line is registered.

18. Method according to claim 17, **characterized in that** the control system comprises a frequency converter wherein the internal voltage reference of the frequency converter is utilized as modulator for a d-q transformation that is used for determining the tension in the line.

19. Method according to claim 18, **characterized in that** further comprising compensating of voltage fall in the supply to the frequency converter.

20. Method according to claim 17, for height configuration of a breeding pen, **characterized by** the tension in the line (20) is based on one or more of the following registrations from sensors in or around the pen and that registers:
- distance A of the installation (10) to the water surface (11) respectively its distance B to the seabed (17),
- density of impurities and occurrence of lice in and at the pen,
- buoyancy in the sea of the pen,
- inclination in the sea of the pen/float collar (12),
- movements or displacement of one or more of the floats of the pen,
- density of biomass in the pen, and
- changes between ebb and flow, wherein
data from all sensors is registered in the central unit (S1) for eventual regulating of the height configuration of the pen (10).

21. Use of construction according to the claims 1-16 and the methods according to claim 17-20 respectively, for regulation of height configuration in the sea of an aquaculture pen (10), for compensating for varying water level above the seabed (17) as effect of changes between ebb and flow subsequently accompanying tidal water currents, additionally pulling the breeding pen (10) down into the sea at threatening storms, waves and sea currents additionally when the aquaculture breeding pen is threatened by pollution in the water mass (14) and the sea surface (11).

22. Use of construction and method according to the preceding claims, for regulating the pens in a multi breeding pen installation, wherein the height configuration for each breeding pen in the installation is individually regulated and coordinated and regulated in a common control system S1/S2.
